# EUROPÄISCHE PATENTSCHRIFT

(11) **EP 3 348 021 B1**
(45) Veröffentlichungstag und Bekanntmachung des Hinweises auf die Patenterteilung: **28.10.2020**
(21) Anmeldenummer: 16757583.6
(22) Anmeldetag: 12.08.2016
(51) Int. Cl.: H04L 12/10, G06F 1/26, H02J 1/14, H04L 12/40, H04W 84/18

(54) **VERFAHREN ZUM SICHERSTELLEN DES BETRIEBS EINES DRAHTLOSMODULS EINES FELDGERÄTS**
METHOD FOR SECURING THE OPERATION OF A WIRELESS MODULE OF A FIELD DEVICE
PROCÉDÉ POUR GARANTIR LE FONCTIONNEMENT D'UN MODULE SANS FIL D'UN APPAREIL DE TERRAIN

(30) Priorität: 10.09.2015 DE 102015115274
(43) Veröffentlichungstag der Anmeldung: 18.07.2018
(73) Patentinhaber: Endress+Hauser SE+Co. KG, 79689 Maulburg (DE)
(72) Erfinder: SEILER, Christian, 79424 Auggen (DE); KLÖFER, Peter, 79585 Steinen (DE)
(74) Vertreter: Andres, Angelika Maria
(86) Internationale Anmeldenummer: PCT/EP2016/069198
(87) Internationale Veröffentlichungsnummer: WO 2017/041988

(56) Entgegenhaltungen:
- WO-A1-2013/012411
- GB-A- 2 462 312
- US-A1- 2014 370 928
- US-A1- 2015 058 738

## Beschreibung

Die Erfindung betrifft ein Verfahren zum Sicherstellen des Betriebs eines Drahtlosmoduls eines Feldgeräts der Prozessautomatisierung umfassend das Drahtlosmodul und zumindest ein Funktionsmodul.

In der Prozessautomatisierungstechnik werden vielfach Feldgeräte eingesetzt, die zur Erfassung und/oder Beeinflussung von Prozessgrößen dienen. Als Feldgeräte werden im Prinzip alle Geräte bezeichnet, die prozessnah eingesetzt werden und die prozessrelevante Informationen liefern oder verarbeiten. Neben Sensoren und Aktoren werden als Feldgeräte allgemein auch solche Einheiten bezeichnet, die direkt an einem Feldbus angeschlossen sind, und zur Kommunikation mit einer Steuerstelle wie einem Leitsystem dienen, wie z.B. Remote I/Os, Gateways, Linking Devices und Wireless Adapter.

Eine Vielzahl solcher Feldgeräte wird von der Endress+Hauser-Gruppe hergestellt und vertrieben.

Häufig werden Feldgeräte mittels Zweidrahttechnik an eine Leitstelle angeschlossen. Bei der Zweidrahttechnik, oder auch Zweileitertechnik genannt, werden Strom zur Energieversorgung und Kommunikationssignale über die gleiche Leitung geschickt: ein Draht für den Hinweg, ein Draht für den Rückweg. In anderen Worten nutzen Speisung und Signal die gleiche Leitung; es gibt keine separate Energieversorgung. Dieser Strom bzw. die entsprechende Leistung muss von den Feldgeräten verwaltet und unter den einzelnen Komponenten des Feldgeräts geteilt werden. So müssen etwa das Sensorelement, die Kommunikation und die Steuerung gemeinsam mit dem vorhandenen Leistungsbudget auskommen.

Der Verzicht auf drahtgebundene Datenübertragung zum Anschluss eines Feldgeräts hat im Industriebereich das Potential Kosten für Verkabelung zu reduzieren, die Gebrauchstauglichkeit zu verbessern und damit Nutzen für den Anwender zu generieren.

Aufgrund der Verfügbarkeit sehr energiesparender Komponenten und Standards für die drahtlosen Kommunikation ist es möglich auch in Zweileitermessgeräten Funktechnologien einzusetzen, ohne dafür weitere Energiespeicher wie z.B. speziell dafür vorgesehene Kondensatoren zu verwenden. Es ist möglich parallel sowohl die Messfunktion als auch die drahtlose Übertragung zu realisieren.

Es gibt Messverfahren, die selbst nicht ohne einen Energiespeicher in Form eines Energiespeicherkondensators auskommen, da die zur Verfügung stehende Leistung nicht für die Messung ausreicht und zunächst zwischen den Messungen Energie gesammelt werden muss. Ein Beispiel hierfür ist eine Füllstandmessung nach dem Radarprinzip. Wird einem entsprechenden Messgerät eine energiesparende Drahtlosschnittstelle hinzugefügt, ist dafür kein weiterer Energiespeicher im System erforderlich, wenn sich das Messsystem ausschließlich aus dem bereits vorhandenen Energiespeicherkondensator speist. Die Messung wird in diesem Fall nur dann durchgeführt, wenn der Energiespeicherkondensator eine ausreichende Kapazität aufweist. Die Dauer der Periode zwischen den einzelnen Messungen hängt dann davon ab, wie viel Leistung von der Drahtlosschnittstelle und weiteren Funktionsmodulen im System gerade benötigt wird. Überschüssige Leistung wird im entsprechenden Energiespeicherkondensator gespeichert.

Die US 7,262,693 beispielsweise offenbart die Verwendung eines Kondensators um die Energie aus dem Bus zwischenzuspeichern um sie dann einem Drahtlosmodul zur Verfügung zu stellen.

Aus der Druckschrift WO2013/012411 A1, ist ein Computersystem bekannt, welches mittels Power over Ethemet (PoE) mit Strom versorgt wird. Die Leistungsaufnahme wird mit einem Schwellenwert verglichen, und es wird ein Signal ausgegeben, dass die Leistungsaufnahme basierend auf dem Vergleich mit dem Schwellenwert begrenzt werden soll. Die Leistungsaufnahme kann selektiv erfolgen, z.B. durch Verringerung der Helligkeit eines Bildschirms, wenn die Gesamtleistungsaufnahme den Schwellenwert erreicht oder überschreitet. Auf diese Weise hält das versorgte Gerät (PD) das Leistungsbudget ein.

Die Druckschrift US2015/058738 A1, betrifft ein Problem, das vor allem bei busgespeisten Feldgeräten, insbesondere bei Zwei-Leiter-Geräten, auftritt. Hierbei ist die im Feldgerät verfügbare Energie begrenzt. Da in den meisten Fällen eine hohe Datenübertragungsrate mit einem hohen Energieverbrauch einhergeht, kann nur eine kleinere Datenübertragungsrate realisiert werden.

Je nach Leistungsverbrauch der Messfunktion ist jedoch ein exakt gleichzeitiger Betrieb der Messung und Funkübertragung häufig nicht möglich. Dann ist es z.B. erforderlich die Messung alternierend zur Funkübertragung durchzuführen, um weiterhin ohne Energiespeicher im System auskommen zu können.

Es ist somit unklar, ob ein Messgerät in einer Anlage mit der verfügbaren Versorgungsspannung in jedem Fall sicher mit einem definierten Verhalten, etwa einer bestimmten Messrate, betrieben werden kann, da der energetische Einfluss der Funkkommunikation nicht ermittelt werden kann. Dies gilt insbesondere für Geräte, deren Funkschnittstelle sich vollständig und ohne weiteren Energiespeicher aus der Zweidrahtschnittstelle speist.

Der Erfindung liegt die Aufgabe zugrunde, festzustellen, ob ein Drahtlosmodul in einem durch einen Zweileiterbus gespeisten Feldgerät immer ausreichend Energie zur Verfügung hat.

Die Aufgabe wird gelöst durch ein Verfahren mit einem Feldgerät umfassend ein Drahtlosmodul und zumindest ein Funktionsmodul, wobei das Feldgerät durch einen Zweileiterbus mit Energie versorgt wird, wobei das Drahtlosmodul durch den Zweileiterbus kontinuierlich mit Energie versorgt wird, wobei das Drahtlosmodul in einen Testmodus versetzt wird, in dem das Drahtlosmodul mit maximaler Sendeleistung sendet und weiterhin aus dem Zweileiterbus kontinuierlich mit Energie versorgt wird, und wobei das Funktionsmodul dann seinen Betrieb so anpasst, dass die dem Feldgerät maximal zur Verfügung stehende Energie nicht überschritten wird.

Der Anwender kann dann testen, welche maximalen Betriebsparameter bei maximalem Leistungsverbrauch des Drahtlosmoduls mit der dem Feldgerät zur Verfügung gestellten Klemmenspannung noch möglich sind. Somit kann der Einfluss der Drahtloskommunikation auf die eigentliche Funktion des Funktionsmoduls in Anwendungen des Anwenders abgesichert werden.

Durch diese Methode kann eine Klemmenspannung ermittelt werden, bei der gerade keine Funktion des Funktionsmoduls mehr möglich ist, da die gesamte Leistung dem Drahtlosmodul zur Verfügung gestellt wird. Oder anders gesagt, können Betriebsparameter so angepasst werden, dass ein Betrieb des Funktionsmoduls gerade noch möglich ist.

Weiterhin wird durch den Testmodus eine Analyse der durch das Feldgerät benutzten Bandbreite im freien Frequenzband erleichtert. Durch den Testmodus werden der Datenverkehr und damit die Benutzung des Frequenzbandes aus zeitlicher Sicht erhöht. Entsprechende Analysegeräte können dadurch die Funksignale des Feldgerätes besser detektieren und visualisieren, als wenn diese wie in vielen Anwendungsfällen nur sehr kurz und sporadisch das Spektrum belegen.

Weiterhin lässt sich der Testmodus für Reichweitentests und zur Ausrichtung der Funkantenne des Feldgeräts nutzen.

In einer vorteilhaften Weiterbildung umfasst das Drahtlosmodul keinen Energiespeicher und wird kontinuierlich und ausschließlich durch den Zweileiterbus mit Energie versorgt. Somit kann dieses Modul immer und dauerhaft voll funktionsfähig sein.

Bevorzugt wird der Testmodus nach seiner Aktivierung erst durch händische Eingabe wieder deaktiviert. So lange hat der Anwender die Möglichkeit das Drahtlosmodul zu testen. Es wird so auch sichergestellt, dass das Drahtlosmodul kontinuierlich und ausschließlich aus dem Zweileiterbus versorgt wird. Wie erwähnt ist in einer Ausgestaltung dem Drahtlosmodul kein Energiespeicher zugeordnet.

In einer vorteilhaften Ausgestaltung wird der Testmodus per Tastendruck am Feldgerät, über Bedienung an einem Display des Feldgeräts, über ein Bediengerät, das drahtlos oder drahtgebunden direkt mit dem Feldgerät verbunden ist, oder über ein Bediengerät, das über den Zweileiterbus mit dem Feldgerät verbunden ist, aktiviert.

Zur Sicherstellung, dass das Drahtlosmodul bei maximalem Verbrauch nur eine minimale Eingangsenergie zur Verfügung steht, wird beim Feldgerät im Testmodus ein kleinstmöglicher Eingangsstrom des Zweileiterbusses, insbesondere etwa 3,6 mA, eingestellt.

In einer weiteren bevorzugten Ausgestaltung sendet das Drahtlosmodul im Testmodus mit höchster Datenrate, maximaler Leistung, maximaler Reichweite, im maximal breitesten Frequenzband, im Dauersendebetrieb mittels Dauerträger und/oder mit maximal leistungsverbrauchendem Abstrahlwinkel.

In einer bevorzugten Ausführungsform beeinflusst eine Änderung der Eingangsspannung des Feldgeräts, insbesondere der Speisespannung des Zweileiterbusses, den Betrieb des Funktionsmoduls. Erhöht ein Anwender am Feldgerät beispielsweise die Eingangsspannung, so kommt diese ausschließlich dem Funktionsmodul zu Gute da die überschüssige Leistung durch das Drahtlosmodul nicht aufgenommen werden kann (es verbraucht ja schon maximal Leistung), und kann etwa in einem zusätzlichen Energiespeicher gesammelt werden.

In einer vorteilhaften Weiterbildung verbraucht das Funktionsmodul zumindest temporär mehr Energie als der Zweileiterbus kontinuierlich liefert, und dem Funktionsmodul ist ein aus dem Zweileiterbus gespeister Energiespeicher zugeordnet.

In einer weiteren bevorzugten Ausgestaltung versendet das Funktionsmoduls seine, an die dem Feldgerät maximal zur Verfügung stehende Energie, angepassten Betriebsparameter und/oder maximale mögliche Betriebsparameter an ein Display des Feldgeräts, via Kommunikation über den Zweileiterbus und/oder über das Drahtlosmodul.

In einer vorteilhaften Ausführungsform umfasst das Funktionsmodul ein Sensorelement zum Erfassen einer Messgröße, wobei das Sensorelement Werte an ein Drahtlosmodul weiterleitet, und wobei das Drahtlosmodul zum drahtlosen Übertragen der Werte an eine übergeordnete Einheit ausgestaltet ist.

"Werte" im Sinne dieser Erfindung sind in einer ersten vorteilhaften Ausgestaltung als "von der Messgröße abhängige Werte" zu verstehen. Das heißt, das Sensorelement leitet von der Messgröße abhängige Werte an das Drahtlosmodul weiter, und das Drahtlosmodul überträgt drahtlos die von der Messgröße abhängigen Werte an eine übergeordnete Einheit.

In einer zweiten vorteilhaften Ausgestaltung sind "Werte" als Parameter zu verstehen, wobei als "Parameter" hierbei eine Stell- oder eine Einflussgröße verstanden werden soll, die auf das Sensorelement einwirkt und somit das Verhalten des Sensorelements ändert oder Informationen über den Zustand des Sensorelements liefert. Das heißt, das Sensorelement leitet Parameter an das Drahtlosmodul weiter, wobei das Drahtlosmodul diese Parameter an eine übergeordnete Einheit drahtlos überträgt. In einer weiteren vorteilhaften Weiterbildung werden Parameter in umgekehrter Richtung übertragen, d.h. eine übergeordnete Einheit überträgt drahtlos Parameter zum Drahtlosmodul, welches die Parameter an das Sensorelement weiterleitet.

In einer vorteilhaften Ausgestaltung umfasst das erste Modul somit ein Sensorelement, etwa zum Erfassen des Füllstandes, beispielsweise nach dem Radarprinzip. In einer weiteren Ausgestaltung umfasst das erste Modul ein Sensorelement zur Bestimmung eines Analyseparameters, insbesondere zur Messung von pH, Redoxpotential, auch ISFET, Leitfähigkeit, Trübung oder Sauerstoff. Weitere vorteilhafte Ausgestaltungen umfassen Sensorelemente zur Erfassung des Durchflusses nach den Prinzipien Coriolis, magnetische Induktion, Vortex und Ultraschall. Weitere vorteilhafte Ausgestaltungen umfassen Sensorelemente zur Erfassung des Füllstands nach den Prinzipien geführtes und frei strahlendes Radar (wie bereits erwähnt), sowie Ultraschall, auch zur Erkennung eines Grenzstandes, wobei zur Erkennung des Grenzstandes auch kapazitive Verfahren zur Anwendung kommen können.

Die Erfindung wird anhand der nachfolgenden Figuren näherer erläutert. Es zeigen
Fig. 1 ein Feldgerät in dem erfindungsgemäße Verfahren angewendet wird,
Fig. 2 eine elektronische Schaltung im Feldgerät umfassen ein Drahtlosmodul und ein Funktionsmodul, und
Fig. 3 das erfindungsgemäße Verfahren als Ablaufdiagramm.

In den Figuren sind gleiche Merkmale mit gleichen Bezugszeichen gekennzeichnet.

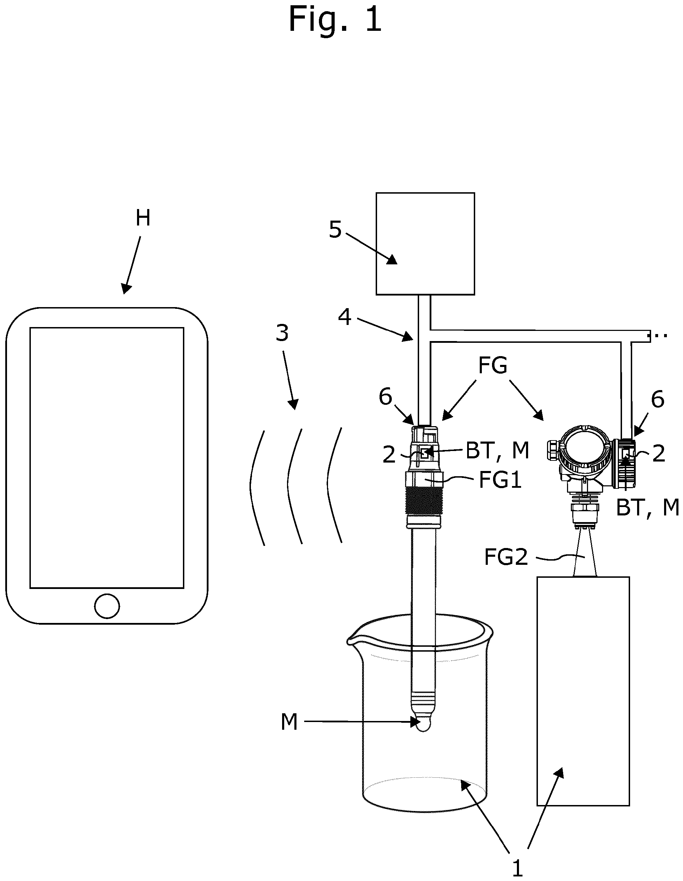

Fig. 1 zeigt ein Feldgerät FG der Prozessautomatisierungstechnik, beispielsweise einen Sensor. Genauer sind zwei Feldgeräte FG1 und FG2 abgebildet. Bei dem Sensor handelt es sich etwa um einen pH-, Redoxpotential-, auch ISFET-, Leitfähigkeit-, Trübungs- oder Sauerstoff-Sensor. Weitere mögliche Sensoren sind Durchflusssensoren nach den Prinzipien Coriolis, magnetische Induktion, Vortex und Ultraschall. Weitere mögliche Sensoren sind Sensoren zur Messung des Füllstands nach den Prinzipien geführtes und frei strahlendes Radar sowie Ultraschall, auch zur Erkennung eines Grenzstandes, wobei zur Erkennung des Grenzstandes auch kapazitive Verfahren zur Anwendung kommen können. Der Sensor umfasst ein Sensorelement M als ein erstes Funktionsmodul des Feldgeräts FG. Auch kann das Sensorelement M Teil der elektronischen Schaltung 2 sein, siehe unten.

Dargestellt ist links ein pH-Sensor und rechts ein Füllstandsensor nach dem Radarprinzip. Das Feldgerät FG bestimmt eine Messgröße eines Mediums 1, im Beispiel in einem Becher wie auf der linken Seite dargestellt. Gleichwohl sind andere Behältnisse wie Leitungen, Becken (wie auf der rechten Seite dargestellt), Behälter, Kessel, Rohr, Rohrleitung o.ä. möglich.

Das Feldgerät FG kommuniziert mit einer Steuerstelle, etwa direkt mit einem Leitsystem 5 oder mit einem zwischengeschalteten Transmitter. Auch kann der Transmitter Teil des Feldgeräts sein, wie etwa im Falle des Füllstandsensors. Die Kommunikation zum Leitsystem 5 erfolgt über einen Zweileiterbus 4, etwa über HART, PROFIBUS PA oder FOUNDATION Fieldbus. Es ist auch möglich die Schnittstelle 6 zum Bus zusätzlich oder alternativ als drahtlose Schnittstelle auszugestalten, etwa nach dem WirelessHART Standard (nicht abgebildet), wobei über WirelessHART eine Anbindung direkt an ein Leitsystem via einem Gateway erfolgt. Darüber hinaus ist optional oder zusätzlich im Falle des HART-Protokolls eine 4..20 mA Schnittstelle vorgesehen (nicht dargestellt). Erfolgt die Kommunikation zusätzlich oder alternativ zu einem Transmitter statt direkt zum Leitsystem 5, können entweder die oben genannten Bussysteme (HART, PROFIBUS PA oder FOUNDATION Fieldbus) zur Kommunikation verwendet werden, oder es wird beispielsweise ein proprietäres Protokoll, etwa vom Typ "Memosens" verwendet. Entsprechende Feldgeräte wie oben beschrieben werden von der Anmelderin vertrieben.

Wie erwähnt ist am busseitigen Ende des Feldgeräts FG eine Schnittstelle 6 zur Verbindung zum Zweileiterbus 4 vorgesehen. Dargestellt ist eine drahtgebundene Variante zur Anbindung an den Bus mittels der Schnittstelle 6. Die Schnittstelle 6 ist beispielsweise als galvanisch trennende, insbesondere als induktive Schnittstelle ausgestaltet. Dies ist beim pH-Sensor dargestellt. Die Schnittstelle 6 besteht dann aus zwei Teilen mit einem ersten Teil auf der Feldgeräteseite und einem zweiten Teil auf Busseite. Diese sind mittels einer mechanischen Steckverbindung miteinander koppelbar. Es werden über die Schnittstelle 6 Daten (bidirektional) und Energie (unidirektional, d.h. in Richtung von der Steuerstelle 5 zum Feldgerät FG) gesendet. Alternativ wird ein entsprechendes Kabel mit oder ohne galvanische Trennung verwendet. Mögliche Ausführungen umfassen ein Kabel mit einem M12- oder 7/8"-Stecker. Dies ist beispielsweise beim Füllstandmessgerät nach dem Radarprinzip dargestellt.

Das Feldgerät FG umfasst weiter eine elektronische Schaltung 2 umfassend ein Drahtlosmodul BT zur drahtlosen Kommunikation 3. Das Drahtlosmodul BT ist ein zweites Funktionsmodul des Feldgeräts FG. Diese drahtlose Kommunikation 3 dient nicht der Anbindung an den Zweileiterbus 4.

Das Drahtlosmodul BT ist etwa als Bluetooth-Modul ausgestaltet. Das Bluetooth-Modul genügt insbesondere dem Protokollstapel Low Energy als "Bluetooth Low Energy" (auch als BTLE, BLE, oder Bluetooth Smart bekannt). Gegebenenfalls umfasst das Drahtlosmodul BT eine entsprechende Schaltung bzw. Komponenten. Das Feldgerät FG genügt somit zumindest dem Standard "Bluetooth 4.0". Die Kommunikation 3 erfolgt vom Feldgerät FG an eine übergeordnete Einheit H. Die übergeordnete Einheit H ist beispielsweise eine mobile Einheit wie ein Mobiltelefon, ein Tablet, ein Notebook, oder ähnliches. Alternativ kann die übergeordnete Einheit H auch als nicht portables Gerät, wie etwa einem Computer ausgestaltet sein. Alternativ handelt es sich bei der übergeordneten Einheit um ein Display mit entsprechender Schnittstelle.

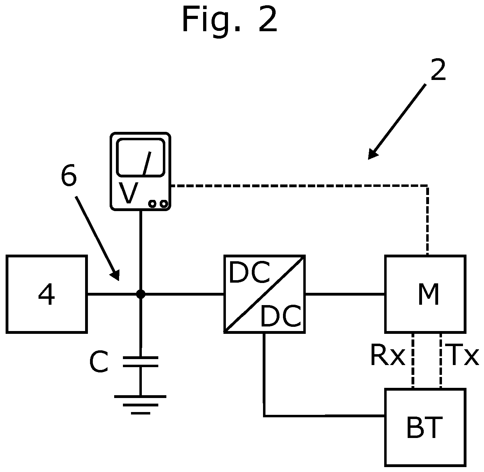

Fig. 2 zeigt die elektronische Schaltung genauer. Die Schaltung 2 umfasst als ein Funktionsmodul das Sensorelement M und als zweites Modul das Drahtlosmodul BT, die jeweils vom Bus 4 mit Energie versorgt werden. Den beiden vorgeschaltet ist ein Gleichspannungswandler DC (englisch: *DC-DC converter*), wobei ein Energiespeicher C (siehe unten) dem Gleichspannungswandler vorgeschaltet ist. Der Gleichspannungswandler DC wandelt die Eingangsspannung von etwa 10-45 V auf etwa 3-5 V. In einer Alternative (nicht dargestellt) ist der Energiespeicher C nach dem Gleichspannungswandler DC geschaltet.

Das Sensorelement M dient zum Erfassen der Messgröße. Der Zweileiterbus 4 liefert nicht genug Energie, damit das Sensorelement M kontinuierlich aus dem Zweileiterbus 4 mit Energie versorgt werden könnte, deswegen ist dem Sensorelement M ein Energiespeicher C zugeordnet. Der Energiespeicher C versorgt das Sensorelement M somit mit Energie.

Bei dem Energiespeicher C handelt es sich etwa um einen Kondensator zum Speichern von Energie. Im Sinne dieser Erfindung handelt es sich bei einem Energiespeicher nicht um einen Filterkondensator, Glättungskondensator, einen Kondensator zur Sicherstellung der elektromagnetischen Verträglichkeit oder einen Kondensator wie er etwa in Gleichspannungswandlern benötigt wird. Der Energiespeicher C ist direkt aus dem Zweileiterbus 4 ladbar.

Wie erwähnt wird das Sensorelement M über den Energiespeicher C mit Energie versorgt, da der Energiebedarf größer ist als der Zweileiterbus 4 kontinuierlich liefern könnte. Im Allgemeinen handelt es sich bei dem Sensorelement M um ein Modul, das temporär eine große Leistung bzw. Energie benötigt. Diese Energie kann nicht kontinuierlich durch den Zweileiterbus geliefert werden. Alternativ zum Sensorelement M kann ein Drahtlosmodul mit einem erhöhten Energiebedarf gewählt werden, etwa ein WLAN-Modul. Wird anstelle des Sensorelements mit hohem Energiebedarf ein WLAN-Modul verwendet, kann statt des Drahtlosmoduls BT (siehe unten) ein Sensorelement verwendet werden, das kontinuierlich aus dem Bus 4 versorgt werden kann, etwa ein Temperatur- oder Drucksensor, siehe ebenfalls unten.

Die Schaltung 2 umfasst weiter ein Drahtlosmodul BT zum drahtlosen Übertragung der von der Messgröße abhängigen Werte an die übergeordnete Einheit H. Das Drahtlosmodul wird auch von dem Gleichspannungswandler DC versorgt, der die Spannung von etwa 10-45 V auf 3-5 V wandelt. Es kann sich dabei um den gleichen Gleichspannungswandler DC handeln, der auch die Energie für das Sensorelement M liefert (abgebildet), oder es kann ein separater Gleichspannungswandler (nicht dargestellt) oder ein Linearwandler (ebenfalls nicht dargestellt) verwendet werden.

Das Drahtlosmodul BT wird ausschließlich vom Zweileiterbus 4 mit Energie versorgt. Das Drahtlosmodul BT braucht niemals mehr Leistung, als der Zweileiterbus 4 kontinuierlich liefern könnte. Aus diesem Grund ist auch kein weiterer Kondensator, im Allgemeinen kein weiterer Energiespeicher, in diesem Zweig nötig. Das Drahtlosmodul BT als zweites Funktionsmodul umfasst somit keinen Energiespeicher und wird kontinuierlich und ausschließlich durch den Zweileiterbus 4 versorgt.

In einer Alternative zu dem im oberen Abschnitt erwähnten Drahtlosmodul BT kann ein Sensorelement verwendet werden, das kontinuierlich aus dem Bus 4 mit Energie versorgt werden kann, etwa ein Temperatur- oder Drucksensor.

Da das Sensorelement M mehr Energie verbraucht als der Bus 4 kontinuierlich liefern kann, findet eine Messung nur statt, wenn der Energiespeicher C ausreichend gefüllt ist und ein kompletter Messzyklus erfolgen kann. Dazu umfasst die Schaltung 2 auch eine entsprechende Messschaltung V, um den Ladezustand des Energiespeichers C zu überwachen. Nach erfolgter Messung der entsprechenden Messgröße leitet das Sensorelement M von der Messgröße abhängige Werte an das Drahtlosmodul BT weiter. Dazu werden Kommunikationsleitungen Tx und Rx verwendet. Diese Kommunikation ist gestrichelt eingezeichnet.

Alternativ zu den von der Messgröße abhängigen Werten werden Parameter übertragen, wobei als "Parameter" eine Stell- oder Einflussgröße verstanden werden soll, die auf das Sensorelement einwirkt und somit das Verhalten des Sensorelements ändert oder Informationen über den Zustand des Sensorelements liefert. Der Vollständigkeit halber soll erwähnt werden, dass Parameter auch in umgekehrter Richtung übertragen werden können, d.h. eine übergeordnete Einheit überträgt drahtlos Parameter zum Drahtlosmodul, welches die Parameter an das Sensorelement weiterleitet.

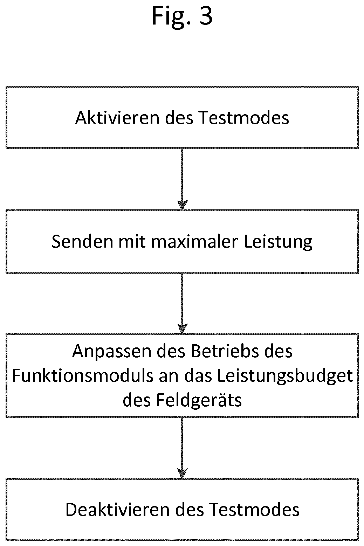

Um festzustellen ob das Drahtlosmodul BT immer mit ausreichend Energie aus dem Zweileiterbus 4 versorgt wird, wird das in Fig. 3 in einem Ablaufdiagramm erläuterte erfindungsgemäße Verfahren vorgeschlagen.

Zunächst wird am Drahtlosmodul BT ein Testmodus aktiviert. Dabei sendet das Drahtlosmodul BT mit maximaler Sendeleistung und wird dabei weiterhin aus dem Zweileiterbus 4 kontinuierlich mit Energie versorgt. Der Testmodus wird per Tastendruck am Feldgerät FG, über Bedienung an einem Display des Feldgeräts FG, über die übergeordnete Einheit H, die drahtlos (wie abgebildet) oder drahtgebunden (nicht abgebildet, etwa über einen zwischengeschalteten Transmitter) direkt mit dem Feldgerät FG verbunden ist, oder über ein Bediengerät, das über den Zweileiterbus 4 mit dem Feldgerät FG verbunden ist (also etwa im Leitsystem 5), aktiviert. Der Testmodus wird nach seiner Aktivierung erst durch händische Eingabe wieder deaktiviert.
Im Testmodus sendet das Drahtlosmodul BT wie erwähnt mit maximaler Sendeleistung, d.h. mit höchster Datenrate, maximaler Reichweite, im maximal breitesten Frequenzband, im Dauersendebetrieb mittels Dauerträger und/oder mit maximal energieverbrauchendem Abstrahlwinkel. Gleichzeitig wird im Feldgerät FG im Testmodus der kleinstmögliche Eingangsstrom des Zweileiterbusses 4, also insbesondere etwa 3,6 mA, eingestellt. Es wird so sichergestellt, dass das Drahtlosmodul BT unter minimalem Energieeingang maximal Energie verbraucht. Die bei dem Testmodus verbrauchte Leistung ist vollständig aus dem Zweileiterbus 4 entnehmbar. Dessen gelieferte Leistung wird nicht überschritten, da zusätzliche Energiespeicher im System zur Unterstützung des Drahtlosmoduls BT nicht vorhanden sind.

Erhöht ein Anwender am Feldgerät FG die Eingangsspannung (entspricht der Klemmenspannung am Zweileiterbus 4), so kommt diese ausschließlich dem Funktionsmodul, also dem Sensorelement M zu Gute da die überschüssige Leistung im Energiespeicherkondensator C gesammelt wird.

Der Anwender kann dann testen, welche maximalen Betriebsparameter bei einem minimalem Schleifenstrom von etwa 3,6 mA und maximalem Leistungsverbrauch des Drahtlosmoduls BT mit der dem Feldgerät FG zur Verfügung gestellten Klemmenspannung noch möglich ist.

Somit kann der Einfluss der Drahtloskommunikation auf die eigentliche Messfunktion in Anwendungen des Anwenders abgesichert werden. Als "Betriebsparameter" sollen hierbei Parameter verstanden werden, die für den Betrieb des Sensorelements M wichtig sind, also etwa die Messrate, Messgenauigkeit, Auflösung, mathematische Operationen wie Mittelung, Filterung etc. Diese Betriebsparameter werden vom Funktionsmodul, also konkret vom Sensorelement M an ein Display des Feldgeräts FG, via Kommunikation über den Zweileiterbus 4 und/oder über das Drahtlosmodul BT versendet. Das Sensorelement M passt die Betriebsparameter an die dem Feldgerät FG maximal zur Verfügung stehende Energie an. Auch können die maximalen Betriebsparameter entsprechend übermittelt werden, d.h. die Betriebsparameter, bei denen ein Betrieb gerade noch aufrechterhalten werden kann.

Durch diese Methode kann eine Klemmenspannung ermittelt werden, bei der gerade keine Messung mehr möglich ist, da die gesamte Leistung dem Drahtlosmodul BT zur Verfügung gestellt wird. Oder anders gesagt, können Betriebsparameter (etwa eine bestimmte Messrate) so angepasst werden, dass ein Betrieb des Sensorelements M gerade noch möglich ist.

Weiterhin wird durch den Testmodus eine Analyse der durch das Feldgerät benutzten Bandbreite im freien Frequenzband, etwa im ISM-Band bei beispielsweise 2,4 GHz oder 5 GHz, erleichtert. Durch den Testmodus werden der Datenverkehr und damit die Benutzung des Frequenzbandes aus zeitlicher Sicht erhöht. Entsprechende Analysegeräte können dadurch die Funksignale des Feldgerätes FG besser detektieren und visualisieren, als wenn diese wie in vielen Anwendungsfällen nur sehr kurz und sporadisch das Spektrum belegen.

Weiterhin lässt sich der Testmodus für Reichweitentests und zur Ausrichtung der Funkantenne des Feldgeräts FG nutzen.

In der oben erwähnten Alternative, in der statt eines Drahtlosmoduls BT ein Sensorelement, das kontinuierlich aus dem Bus 4 gespeist werden kann, etwa ein Temperatur- oder Drucksensor, verwendet wird, wird statt des Sensorelements M eine Drahtlosschnittstelle verwendet, die nicht kontinuierlich aus dem Bus 4 versorgt werden kann. Dieser Schnittstelle ist dann der Energiespeicher C zugeordnet. Es kann in dieser Konfiguration ermittelt werden, welche maximale Sendeleistung, Sendegeschwindigkeit, Senderate, etc. dieser Drahtlosschnittstelle bei maximalem Verbrauch des Sensorelements möglich wäre.

### Bezugszeichenliste

- 1: Behältnis mit zu messendem Medium
- 2: Elektronische Schaltung
- 3: drahtlose Verbindung
- 4: Zweileiterbus
- 5: Steuerstelle
- 6: Schnittstelle
- BT: Drahtlosmodul
- C: Energiespeicherkondensator
- DC: Gleichspannungswandler
- FG: Feldgerät
- H: Übergeordnete Einheit
- M: Sensorelement

## Patentansprüche

1. Verfahren zum Sicherstellen des Betriebs eines Drahtlosmoduls (BT) eines Feldgeräts (FG) der Prozessautomatisierung umfassend das Drahtlosmodul (BT) und zumindest ein Funktionsmodul (FG),
wobei das Feldgerät (FG) durch einen Zweileiterbus (4) mit Energie versorgt wird,
wobei das Drahtlosmodul (BT) durch den Zweileiterbus (4) kontinuierlich mit Energie versorgt wird,
**dadurch gekennzeichnet, dass** das Drahtlosmodul (BT) in einen Testmodus versetzt wird, in dem das Drahtlosmodul (BT) mit maximaler Sendeleistung sendet und weiterhin aus dem Zweileiterbus (4) kontinuierlich mit Energie versorgt wird,
und wobei das Funktionsmodul (M) dann seinen Betrieb so anpasst, dass die dem Feldgerät (FG) maximal zur Verfügung stehende Energie nicht überschritten wird.

2. Verfahren nach Anspruch 1,
wobei das Drahtlosmodul (BT) keinen Energiespeicher umfasst und kontinuierlich und ausschließlich durch den Zweileiterbus (4) mit Energie versorgt wird.

3. Verfahren nach Anspruch 1 oder 2,
wobei der Testmodus nach seiner Aktivierung durch händische Eingabe, deaktiviert wird.

4. Verfahren nach zumindest einem der Ansprüche 1 bis 3,
wobei der Testmodus per Tastendruck am Feldgerät (FG), über Bedienung an einem Display des Feldgeräts (FG), über ein Bediengerät, das drahtlos oder drahtgebunden direkt mit dem Feldgerät verbunden ist, oder über ein Bediengerät, das über den Zweileiterbus (4) mit dem Feldgerät (FG) verbunden ist, aktiviert wird.

5. Verfahren nach zumindest einem der Ansprüche 1 bis 4,
wobei das Feldgerät (FG) im Testmodus einen kleinstmöglichen Eingangsstrom des Zweileiterbusses (4), insbesondere etwa 3,6 mA, einstellt.

6. Verfahren nach zumindest einem der Ansprüche 1 bis 5,
wobei das Drahtlosmodul (BT) im Testmodus mit höchster Datenrate, maximaler Leistung, maximaler Reichweite, im maximal breitesten Frequenzband, im Dauersendebetrieb mittels Dauerträger und/oder mit maximal leistungsverbrauchendem Abstrahlwinkel sendet.

7. Verfahren nach zumindest einem der Ansprüche 1 bis 6,
wobei eine Änderung der Eingangsspannung des Feldgeräts (FG), insbesondere der Speisespannung des Zweileiterbusses (4), den Betrieb des Funktionsmoduls (M) beeinflusst.

8. Verfahren nach zumindest einem der Ansprüche 1 bis 7,
wobei das Funktionsmodul (M) zumindest temporär mehr Energie verbraucht als der Zweileiterbus (4) kontinuierlich liefert, und dem Funktionsmodul (M) ein aus dem Zweileiterbus (4) gespeister Energiespeicher (C) zugeordnet ist.

9. Verfahren nach zumindest einem der Ansprüche 1 bis 8,
wobei das Funktionsmoduls (M) seine, an die dem Feldgerät (FG) maximal zur Verfügung stehende Energie, angepassten Betriebsparameter und/oder maximale mögliche Betriebsparameter an ein Display des Feldgeräts (FG), via Kommunikation über den Zweileiterbus (4) und/oder über das Drahtlosmodul (BT) versendet.

10. Verfahren nach zumindest einem der Ansprüche 1 bis 9,
wobei das Funktionsmodul ein Sensorelement (M) zum Erfassen einer Messgröße umfasst, wobei das Sensorelement Werte an ein Drahtlosmodul (BT) weiterleitet, und
wobei das Drahtlosmodul (BT) zum drahtlosen Übertragen der Werte an eine übergeordnete Einheit (H) ausgestaltet ist.

11. Verfahren nach zumindest einem der Ansprüche 1 bis 10,
wobei es sich bei dem Sensorelement (M) um ein Sensorelement zu Messung des Füllstandes, insbesondere nach dem Radar-Prinzip, des pH-Wertes, des Redoxpotentials, auch ISFET, der Leitfähigkeit, der Trübung oder des Sauerstoffgehalts handelt.

## Claims

1. Procedure designed to safeguard the operation of a wireless module (BT) of a field device (FG) used in process automation comprising the wireless module (BT) and at least a function module (FG),
wherein energy is supplied to the field device (FG) by a two-wire bus (4),
wherein energy is constantly supplied to the wireless module (BT) by the two-wire bus (4),
**characterized in that**
the wireless module (BT) is set to a test mode in which the wireless module (BT) transmits with maximum transmission power and continues to be constantly supplied with energy from the two-wire bus (4),
and wherein the function module (M) then adapts its operation in such a way that the maximum energy available to the field device (FG) is not exceeded.

2. Procedure as claimed in Claim 1,
wherein the wireless module (BT) does not comprise an energy storage module and is continuously and exclusively supplied with energy by the two-wire bus (4).

3. Procedure as claimed in Claim 1 or 2,
wherein the test mode, once activated, is deactivated by a manual entry.

4. Procedure as claimed in at least one of the Claims 1 to 3,
wherein the test mode is activated by the press of a button on the field device (FG), via operation at a display of the field device (FG), via an operating unit that is directly connected to the field device via wired or wireless technology, or via an operating unit that is connected to the field device (FG) via the two-wire bus (4).

5. Procedure as claimed in at least one of the Claims 1 to 4,
wherein, in the test mode, the field device (FG) sets a smallest possible input current of the two-wire bus (4), particularly around 3.6 mA.

6. Procedure as claimed in at least one of the Claims 1 to 5,
wherein, in the test mode, the wireless module (BT) transmits at the highest data rate, maximum power, maximum range, at the broadest possible frequency band, in permanent transmission mode by means of a continuous carrier, and/or at an emitting angle with maximum power consumption.

7. Procedure as claimed in at least one of the Claims 1 to 6,
wherein a change in the input voltage of the field device (FG), particularly the feed voltage of the two-wire bus (4), influences the operation of the function module (M).

8. Procedure as claimed in at least one of the Claims 1 to 7,
wherein the function module (M) at least temporarily consumes more energy than the two-wire bus (4) continuously supplies, and wherein an energy storage module (C), fed from the two-wire bus, is assigned to the function module (M).

9. Procedure as claimed in at least one of the Claims 1 to 8,
wherein the function module (M) sends its operating parameters, adapted to the maximum energy available to the field device (FG), and/or maximum possible operating parameters to a display of the field device (FG), via communication via the two-wire bus (4) and/or via the wireless module (BT).

10. Procedure as claimed in at least one of the Claims 1 to 9,
wherein the function module comprises a sensor element (M) designed to measure a measured variable, wherein the sensor element forwards values to a wireless module (BT) and wherein the wireless module (BT) is equipped for the wireless transmission of the values to the higher-level unit (H).

11. Procedure as claimed in at least one of the Claims 1 to 10,
wherein the sensor element (M) is a sensor element for measuring the level, particularly according to the radar principle, the pH value, the ORP potential, also ISFET, the conductivity, the turbidity or the oxygen content.

## Revendications

1. Procédé destiné à sécuriser le fonctionnement d'un module sans fil (BT) d'un appareil de terrain (FG) de l'automatisation des process comprenant le module sans fil (BT) et au moins un module de fonction (FG),
l'appareil de terrain (FG) étant alimenté en énergie par un bus bifilaire (4),
le module sans fil (BT) étant alimenté continuellement par le bus bifilaire (4),
**caractérisé**
**en ce que** le module sans fil (BT) est placé dans un mode de test, dans lequel le module sans fil (BT) émet avec une puissance d'émission maximale et reste alimenté continuellement en énergie par l'intermédiaire du bus bifilaire (4),
et **en ce que** le module de fonction (M) adapte son fonctionnement de telle sorte à ne pas dépasser l'énergie maximale disponible pour l'appareil de terrain (FG).

2. Procédé selon la revendication 1,
pour lequel le module sans fil (BT) ne comporte pas d'accumulateur d'énergie et est alimenté continuellement et exclusivement en énergie par le bus bifilaire (4).

3. Procédé selon la revendication 1 ou 2,
pour lequel le mode de test, après son activation, est désactivé par une saisie manuelle.

4. Procédé selon au moins l'une des revendications 1 à 3,
pour lequel le mode de test est activé par simple pression de touche sur l'appareil de terrain (FG), via la commande sur un afficheur de l'appareil de terrain (FG), via un appareil de commande, qui est relié au moyen d'une liaison sans fil ou avec fil avec l'appareil de terrain, ou via un appareil de commande, qui est relié par l'intermédiaire du bus bifilaire (4) avec l'appareil de terrain (FG).

5. Procédé selon au moins l'une des revendications 1 à 4,
pour lequel l'appareil de terrain (FG) règle, en mode de test, un courant d'entrée minimal du bus bifilaire (4), notamment env. 3,6 mA.

6. Procédé selon au moins l'une des revendications 1 à 5,
pour lequel le module sans fil (BT) émet en mode test, à vitesse de transmission maximale, à puissance maximale, à portée maximale, avec une bande de fréquence la plus large possible, en mode d'émission continu au moyen d'une porteuse permanente et/ou avec un angle d'émission offrant une puissance maximale.

7. Procédé selon au moins l'une des revendications 1 à 6,
pour lequel un changement de la tension d'entrée de l'appareil de terrain (FG), notamment de la tension d'alimentation du bus bifilaire (4), influence le fonctionnement du module de fonction (M).

8. Procédé selon au moins l'une des revendications 1 à 7,
pour lequel le module de fonction (M) consomme au moins temporairement plus d'énergie que le bus bifilaire (4) fournit continuellement, et pour lequel un accumulateur d'énergie (C), alimenté à partir du bus bifilaire, est affecté au module de fonction (M).

9. Procédé selon au moins l'une des revendications 1 à 8,
pour lequel le module de fonction (M) envoie ses paramètres de fonctionnement, adaptés à l'énergie maximale disponible pour l'appareil de terrain (FG), et/ou les paramètres de fonctionnement maximaux possibles, à un afficheur de l'appareil de terrain (FG), au moyen d'une communication via le bus bifilaire (4) et/ou via le module sans fil (BT).

10. Procédé selon au moins l'une des revendications 1 à 9,
pour lequel le module de fonction comprend un élément capteur (M) destiné à la mesure d'une grandeur, l'élément capteur transmettant les valeurs à un module sans fil (BT) et le module sans fil (BT) étant équipé d'une unité maître (H) pour la transmission sans fil des valeurs.

11. Procédé selon au moins l'une des revendications 1 à 10,
pour lequel il s'agit, concernant l'élément capteur (M), d'un élément capteur destiné à la mesure de niveau, notamment d'après le principe radar, du pH, du potentiel de redox, également ISFET, de la conductivité, de la turbidité ou de la teneur en oxygène.
